# EUROPEAN PATENT APPLICATION

(11) **EP 4 693 094 A1**
(43) Date of publication of application: **11.02.2026**
(21) Application number: 24806512.0
(22) Date of filing: 11.05.2024
(51) Int. Cl.: G06F 40/166

(54) **TEXT GENERATION METHOD AND APPARATUS, DEVICE, AND STORAGE MEDIUM**

(30) Priority: 12.05.2023 CN 202310538686
(71) Applicant: JINGDONG TECHNOLOGY INFORMATION TECHNOLOGY CO., LTD., Beijing 100176 (CN)
(72) Inventor: LI, Haoran, Beijing 100086 (CN); WU, Youzheng, Beijing 100086 (CN)
(74) Representative: Böckmann genannt Dallmeyer, Georg Nikolas
(86) International application number: PCT/CN2024/092636
(87) International publication number: WO 2024/235160

(57) **Abstract**

Disclosed in embodiments of the present application are a text generation method and apparatus, a device, and a storage medium. The method comprises: acquiring first texts generated at a previous moment; determining a plurality of first candidate words corresponding to each first text, and using each first candidate word as a suffix of the first text to generate a plurality of first candidate texts; traversing and combining the plurality of first candidate texts corresponding to the preset number of first texts to determine a plurality of candidate text sets; determining, based on each word in each first candidate text, repeated words in each candidate text set, and performing penalty processing on word scores corresponding to the repeated words to determine target scores corresponding to the repeated words; determining, based on the target scores corresponding to the repeated words and word scores corresponding to non-repeated words in each candidate text set, a set score corresponding to each candidate text set; and determining a target text set based on the set score, and determining second texts generated at a current moment based on the target text set.

## Description

### CROSS-REFERENCE TO RELATED APPLICATIONS

The present application claims priority to Chinese Patent Application No. 202310538686.9, which was filed with the Chinese Patent Office on May 12, 2023, the content of which is hereby incorporated by reference in its entirety.

### TECHNICAL FIELD

Embodiments of the present application relate to computer technology, and, for example, to a text generation method and apparatus, a device, and a storage medium.

### BACKGROUND

With the rapid development of computer technology, it is often necessary to generate some texts automatically to meet different business needs. For example, the generated texts can be used for machine learning, text translation, or the like.

At present, texts are usually generated by beam search. The beam search is used to search for a sequence with the largest conditional probability value of the generated text sequence.

However, in the process of implementing the present application, the inventors have found that there are at least the following problems in the related art:
The similarity of texts generated by beam search in the related art is very high. For example, in two generated texts, only one word is different in long sentences or text semantics are exactly the same, which leads to low diversity of the generated texts.

### SUMMARY

Embodiments of the present application provide a text generation method and apparatus, a device, and a storage medium, to improve the diversity of generated texts.

In a first aspect, an embodiment of the present application provides a text generation method, comprising:
acquiring a preset number of first texts generated at a previous moment;
determining a plurality of first candidate words corresponding to each of the first texts, and using each of the first candidate words as a suffix of the first text to generate a plurality of first candidate texts;
traversing and combining the plurality of first candidate texts corresponding to the preset number of the first texts to determine a plurality of candidate text sets, wherein each candidate text set includes the preset number of first candidate texts;
determining, based on each word in each first candidate text, repeated words that appear repeatedly in each candidate text set, and performing penalty processing on word scores corresponding to the repeated words to determine target scores corresponding to the repeated words, wherein the word scores corresponding to the repeated words are used to represent conditional probability values of the repeated words as text suffix words;
determining, based on the target scores corresponding to the repeated words and word scores corresponding to non-repeated words in each candidate text set, a set score corresponding to each candidate text set; and
determining a target text set from the plurality of candidate text sets based on the set score, and determining the preset number of second texts generated at a current moment based on the target text set.

In a second aspect, an embodiment of the present application further provides a text generation apparatus, comprising:
a first text acquisition module configured to: acquire a preset number of first texts generated at a previous moment;
a first candidate text generation module configured to: determine a plurality of first candidate words corresponding to each of the first texts, and use each of the first candidate words as a suffix of the first text to generate a plurality of first candidate texts;
a candidate text set determination module configured to: traverse and combine the plurality of first candidate texts corresponding to the preset number of the first texts to determine a plurality of candidate text sets, wherein each candidate text set includes the preset number of first candidate texts;
a target score determination module configured to: determine, based on each word in each first candidate text, repeated words that appear repeatedly in each candidate text set, and perform penalty processing on word scores corresponding to the repeated words to determine target scores corresponding to the repeated words, wherein the word scores corresponding to the repeated words are used to represent conditional probability values of the repeated words as text suffix words;
a set score determination module configured to: determine, based on the target scores corresponding to the repeated words and word scores corresponding to non-repeated words in each candidate text set, a set score corresponding to each candidate text set; and
a second text determination module configured to: determine a target text set from the plurality of candidate text sets based on the set score, and determine the preset number of second texts generated at a current moment based on the target text set.

In a third aspect, an embodiment of the present application further provides an electronic device, the electronic device comprising:
at least one processor; and
a memory configured to store at least one program that, when executed by the at least one processor, causes the at least one processor to implement the text generation method provided by any embodiment of the present application.

In a fourth aspect, an embodiment of the present application further provides a computer-readable storage medium having a computer program stored thereon that, when executed by a processor, implements the text generation method provided by any embodiment of the present application.

### BRIEF DESCRIPTION OF THE DRAWINGS

FIG. 1 is a flowchart of a text generation method provided by an embodiment of the present application;
FIG. 2 is an example of text generation involved in an embodiment of the present application;
FIG. 3 is a flowchart of another text generation method provided by an embodiment of the present application;
FIG. 4 is an example of a plurality of second candidate words corresponding to a second text involved in an embodiment of the present application;
FIG. 5 is an example of target second candidate words corresponding to a second text involved in an embodiment of the present application;
FIG. 6 is a schematic structural diagram of a text generation apparatus provided by an embodiment of the present application;
FIG. 7 is a schematic structural diagram of an electronic device provided by an embodiment of the present application.

### DETAILED DESCRIPTION

Hereinafter, the present application is described in detail in conjunction with the figures and embodiments. It should be understood that the specific embodiments described herein are only used to explain the present application rather than to limit the present application. In addition, it should be noted that, for the convenience of description, the figures show only parts related to the present application rather than all structures.

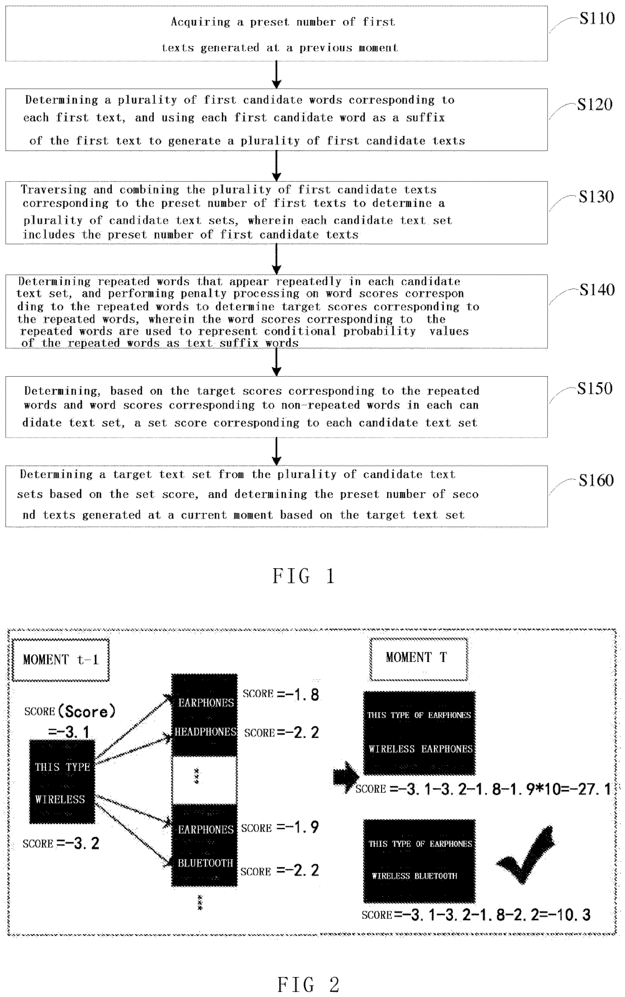

FIG. 1 is a flowchart of a text generation method provided by an embodiment of the present application. The present embodiment is applicable to generating texts with diversity. The method can be executed by a text generation apparatus, which can be realized by software and/or hardware and integrated into an electronic device. As shown in FIG. 1, the method comprises the following steps:
S110: acquiring a preset number of first texts generated at a previous moment.

In this step, the preset number may be a preset number of texts generated at each moment. For example, the preset number can also be used to represent a beam width. The previous moment may refer to a moment when the texts were generated last time. The current moment may refer to a moment when the texts are generated currently. The previous moment may refer to a last moment adjacent to the current moment. For example, the current moment is moment t, and the previous moment is moment t-1. The first texts may refer to texts generated at a previous moment. The texts in the present embodiment can be represented by a word sequence consisting of at least one word. Complete texts need to be generated repeatedly and continuously based on the first texts generated at the previous moment. For example, during the first generation, the first texts corresponding to the previous moment obtained may be empty texts, so that new texts can be generated from scratch; or they may be preset existing texts, so that texts can be generated continuously based on the existing texts. As time goes by, the lengths of the generated texts get longer and longer.

S120: determining a plurality of first candidate words corresponding to each first text, and using each first candidate word as a suffix of the first text to generate a plurality of first candidate texts.

In this step, the first candidate words refer to words that can serve as suffixes of the first texts. The first candidate texts may serve as texts generated at the current moment.

Exemplarily, all first candidate words corresponding to each first text can be determined based on a dictionary, and each first candidate word can be used as a suffix of the corresponding first text for concatenation and combination to obtain all first candidate texts corresponding to each first text. For example, FIG. 2 gives an example of text generation. As shown in FIG. 2, there are two first texts, namely, "this type" and "wireless", wherein the first candidate words corresponding to "this type" are: "earphones", "headphones", and the like, and the first candidate words corresponding to "wireless" are: "earphones", "Bluetooth", etc. The first candidate texts obtained by using each first candidate word as a suffix of the corresponding first text are: "this type of earphones", "this type of headphones", "wireless earphones", "wireless Bluetooth", etc.

S130: traversing and combining the plurality of first candidate texts corresponding to the preset number of first texts to determine a plurality of candidate text sets, wherein each candidate text set includes the preset number of first candidate texts.

Exemplarily, all first candidate texts corresponding to all first texts can be traversed and combined exhaustively to obtain all candidate text sets containing the preset number of first candidate texts. For example, if the preset number is 2, all the first candidate texts corresponding to all the first texts are combined in pairs to obtain a candidate text set corresponding to each combination, so as to generate texts more comprehensively. It is also possible to traversely select a first candidate text from all the first candidate texts corresponding to each first text for combination to obtain a candidate text set corresponding to each selection, so that each first candidate text in the candidate text set has a different text prefix, thereby ensuring the diversity of generated texts. It should be noted that two candidate text sets may have at least one different first candidate text. For example, FIG. 2 gives only two candidate text sets, namely: {"this type of earphones", "wireless earphones"} and {"this type of earphones", "wireless Bluetooth"}.

S140: determining repeated words that appear repeatedly in each candidate text set, and performing penalty processing on word scores corresponding to the repeated words to determine target scores corresponding to the repeated words, wherein the word scores corresponding to the repeated words are used to represent conditional probability values of the repeated words as text suffix words.

In this step, the repeated words may refer to words that appear repeatedly in the candidate text set. The word scores corresponding to the repeated words can be used to represent conditional probability values of the repeated words as text suffix words. For example, the conditional probability values can be directly used as the word scores, or scores obtained by performing operations such as taking logarithms of the conditional probability values can be used as the word scores. The word scores can be used to reflect the readability and fluency of the texts. For example, the higher the word scores, the higher the readability and fluency of the texts generated using the words. The target scores corresponding to the repeated words may refer to scores obtained after performing penalty processing on the word scores. The target scores corresponding to the repeated words are smaller than the corresponding word scores.

Exemplarily, for each candidate text set, all words in each first candidate text in the candidate text set can be compared to determine all repeated words that appear repeatedly in the candidate text set, and penalty processing can be performed on the word score corresponding to each repeated word to determine a target score corresponding to each repeated word. For example, any score that is smaller than the word score of the repeated word can be used as a target score corresponding to the repeated word. For example, a score obtained by subtracting a preset score from the word score corresponding to each repeated word can be used as the target score corresponding to the repeated word.

It should be noted that the word score corresponding to each word can be obtained by using operations such as taking a logarithm of the conditional probability value, and the word score obtained in this way is a negative number. The larger the negative number, the higher the conditional probability value, and the higher the readability and fluency. For example, in FIG. 2, the word score corresponding to "earphones" in "this type of earphones" is: -1.8, which represents a score of the word "earphones" as a suffix of "this type"; the word score corresponding to "earphones" in "wireless earphones" is: -1.9, which represents a score of the word "earphones" as a suffix of "wireless".

Exemplarily, "performing penalty processing on word scores corresponding to the repeated words to determine target scores corresponding to the repeated words" in S140 may comprise: acquiring a corresponding word score of a current repeated word at each occurrence position; multiplying a word score corresponding to at least one preset occurrence position by a preset penalty coefficient to obtain a corresponding target score of the current repeated word at the preset occurrence position; and using word scores corresponding to remaining occurrence positions except the preset occurrence position as corresponding target scores of the current repeated word at the remaining occurrence positions.

Each repeated word can be taken as a current repeated word to perform penalty processing on the word score. The occurrence position may refer to an occurrence position of the repeated word in the candidate text set. The corresponding word scores may be different depending on the occurrence position. For example, for the candidate text set {"this type of earphones", "wireless earphones"} in FIG. 2, the repeated word is "earphones", which appear twice, wherein the first occurrence position is in "this type of earphones", with a corresponding word score of -1.8; the second occurrence position is in "wireless earphones", with a corresponding word score of -1.9. The preset occurrence position may be an occurrence position that is preset and needs to be subjected to penalty processing of the word score. The number of preset occurrence positions may be at least one, which is set based on business requirements. For example, the preset appearance position is the first appearance position, the last appearance position, or the like. The remaining appearance positions refer to the other appearance positions among all the appearance positions except the preset appearance position(s). The preset penalty coefficient may be a preset coefficient greater than 1. For example, the preset penalty coefficient is 10.

Exemplarily, as shown in FIG. 2, when the preset appearance position is the last appearance position, the corresponding target score of the repeated word "earphones" at the first appearance position is determined as: an original word score, i.e., -1.8, and the corresponding target score at the second appearance position, i.e., the last appearance position, is determined as: a product of the original word score -1.9 and the preset penalty coefficient 10, i.e., -19. By performing penalty processing only on the word score at the preset occurrence position, the penalty processing efficiency can be improved while ensuring the diversity effect.

S150: determining, based on the target scores corresponding to the repeated words and word scores corresponding to non-repeated words in each candidate text set, a set score corresponding to each candidate text set.

Exemplarily, the target scores corresponding to all repeated words and the word scores corresponding to all non-repeated words in each candidate text set can be integrated to obtain a set score corresponding to each candidate text set. In the present embodiment, word score penalty processing can be performed only on the repeated words in the candidate text set, without performing the word score penalty processing on non-repeated words, thereby tending to generate texts containing the non-repeated words, so as to improve the diversity of the generated texts.

Exemplarily, S150 may comprise: adding target scores corresponding to all repeated words and word scores corresponding to all non-repeated words in a current candidate text set, and determining an obtained addition result as a set score corresponding to the current candidate text set.

Exemplarily, each candidate text set can be used as the current candidate text set for the calculation of a set score. For example, the set score corresponding to the candidate text set {"this type of earphones", "wireless earphones"} in FIG. 2 is: -3.1-3.2-1.8-19=-27.1.

If all words in the current candidate text set are non-repeated words and there are no repeated words, the word scores corresponding to all the non-repeated words in the current candidate text set can be added directly, and an obtained addition result can be determined as the set score corresponding to the current candidate text set. The set score corresponding to the candidate text set {"this type of earphones", "wireless Bluetooth"} in FIG. 2 is: -3.1-3.2-1.8-2.2=-10.3.

S160: determining a target text set from the plurality of candidate text sets based on the set score, and determining the preset number of second texts generated at a current moment based on the target text set.

In this step, the target text set may refer to a final text set generated at the current moment. The second texts may refer to final texts generated at the current moment.

Exemplarily, an optimal target text set is selected based on the set score corresponding to each candidate text set, and the preset number of second texts generated at the current moment are obtained based on the target text set. By performing word score penalty processing on the repeated words and making a selection based on the set score, it is possible to tend to select second texts containing the non-repeated words, thereby greatly improving the diversity of the generated second texts.

Exemplarily, S160 may comprise: determining a candidate text set with the highest set score as the target text set, and determining target texts in the target text set as the preset number of second texts generated at the current moment. All candidate text sets can be sorted based on the set scores, the candidate text set with the highest set score can be used as a final target text set, and each target text in the target text set can be used as the second text generated at the current moment, thereby generating diversified second texts. For example, the candidate text set {"this type of earphones", "wireless Bluetooth"} in FIG. 2 is determined as a target text set, and the two target texts in the set are two second texts generated at the current moment.

It should be noted that texts at the next moment can be continuously generated based on the second texts generated at the current moment by looping through steps S110 to S160 until the number of times of generation is equal to a preset number of times or the lengths of the generated texts are equal to a preset complete text length.

The technical solution of the present embodiment, in the current time step, generates a plurality of first candidate texts based on a preset number of first texts generated at a previous moment, and traverses and combines the plurality of first candidate texts corresponding to the preset number of first texts to obtain a plurality of candidate text sets, performs word score penalty processing on repeated words that appear repeatedly in each candidate text set, and determines a set score corresponding to each candidate text set based on target scores after the penalty, determines a target text set from the plurality of candidate text sets based on the set score, and determines the preset number of second texts generated at the current moment based on the target text set, so as to tend to generate texts containing the non-repeated words by performing the word score penalty processing on the repeated words that appear repeatedly in each candidate text set, thereby improving the diversity of the generated texts.

On the basis of the above technical solution, after S160, the following steps may also be included:
S170: if lengths of the second texts are greater than or equal to a preset length, determining a plurality of second candidate words corresponding to each second text.

In this step, the preset length may be a preset minimum length for stopping the loop generation of texts using the above steps S110 to S160. The second candidate words refer to words that can be used as suffixes of the second texts.

It should be noted that when the generated texts reach a certain length, the above-mentioned generation method for improving diversity will affect the readability of the generated texts to a certain extent, so that, after exceeding a certain length, there is a need to use a generation method that ensures readability to continuously generate texts, so as to ensure the text readability while improving the diversity.

Exemplarily, after the second texts are generated at the current moment, it can be detected whether the lengths of the second texts generated at the current moment are greater than or equal to a preset length. When the lengths of the second texts generated at the current moment are greater than or equal to the preset length, texts at the next moment are generated by using steps S170 to S190. When the lengths of the second texts generated at the current moment are less than the preset length, the texts at the next moment are generated by continuously using the above steps S110 to S160. When the lengths of the second texts are greater than or equal to the preset length, a plurality of second candidate words corresponding to each second text can be determined based on the dictionary.

S180: using each second candidate word as a suffix of the second text to generate a plurality of second candidate texts, and determining a text score corresponding to each second candidate text based on the word score corresponding to each word in each second candidate text.

Exemplarily, each second candidate word can be used as a suffix of the corresponding second text for concatenation and combination to obtain all second candidate texts corresponding to each second text. For each second candidate text, the word scores corresponding to various words in the second candidate text can be added, and an obtained addition result can be used as a text score corresponding to the second candidate text. The text score can be used to represent the readability of the second candidate text. For example, the higher the text score, the higher the readability of the second candidate text.

S190: determining, based on the text score, the preset number of third texts to be generated at the next moment from the plurality of second candidate texts corresponding to the preset number of second texts.

Exemplarily, all the second candidate texts can be arranged in descending order based on the text scores to obtain a second candidate text sequence with successively decreasing text scores, and the previous preset number of second candidate texts in the second candidate text sequence can be determined as third texts to be generated at the next moment. By selecting the second candidate texts with higher text scores as the third texts, the text readability can be ensured while improving the diversity.

It should be noted that after the next moment, texts at a subsequent moment can be continuously generated based on the third texts generated at the next moment by looping through steps S170 to S190 until the number of times of generation is equal to a preset number of times or the lengths of the generated texts are equal to a preset complete text length.

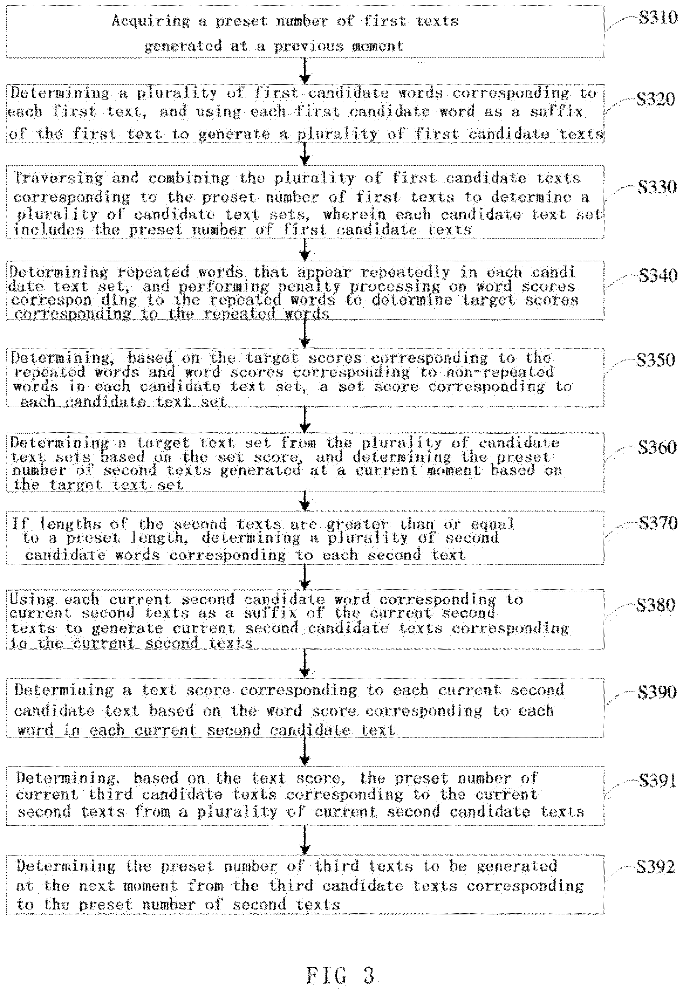

FIG. 3 is a flowchart of another text generation method provided by an embodiment of the present application. Based on the above various embodiments, the present embodiment refines the step "using each second candidate word as a suffix of the second text to generate a plurality of second candidate texts, and determining a text score corresponding to each second candidate text based on the word score corresponding to each word in each second candidate text", and, on this basis, also refines the step "determining, based on the text score, the preset number of third texts to be generated at the next moment from the plurality of second candidate texts". The explanations of the terms that are the same as or corresponding to the above various embodiments are not repeated here.

Referring to FIG. 3, the other text generation method provided by the present embodiment comprises the following steps:
S310: acquiring a preset number of first texts generated at a previous moment.
S320: determining a plurality of first candidate words corresponding to each first text, and using each first candidate word as a suffix of the first text to generate a plurality of first candidate texts.
S330: traversing and combining the plurality of first candidate texts corresponding to the preset number of first texts to determine a plurality of candidate text sets, wherein each candidate text set includes the preset number of first candidate texts.
S340: determining repeated words that appear repeatedly in each candidate text set, and performing penalty processing on word scores corresponding to the repeated words to determine target scores corresponding to the repeated words.
S350: determining, based on the target scores corresponding to the repeated words and word scores corresponding to non-repeated words in each candidate text set, a set score corresponding to each candidate text set.
S360: determining a target text set from the plurality of candidate text sets based on the set score, and determining the preset number of second texts generated at a current moment based on the target text set.
S370: if lengths of the second texts are greater than or equal to a preset length, determining a plurality of second candidate words corresponding to each second text.

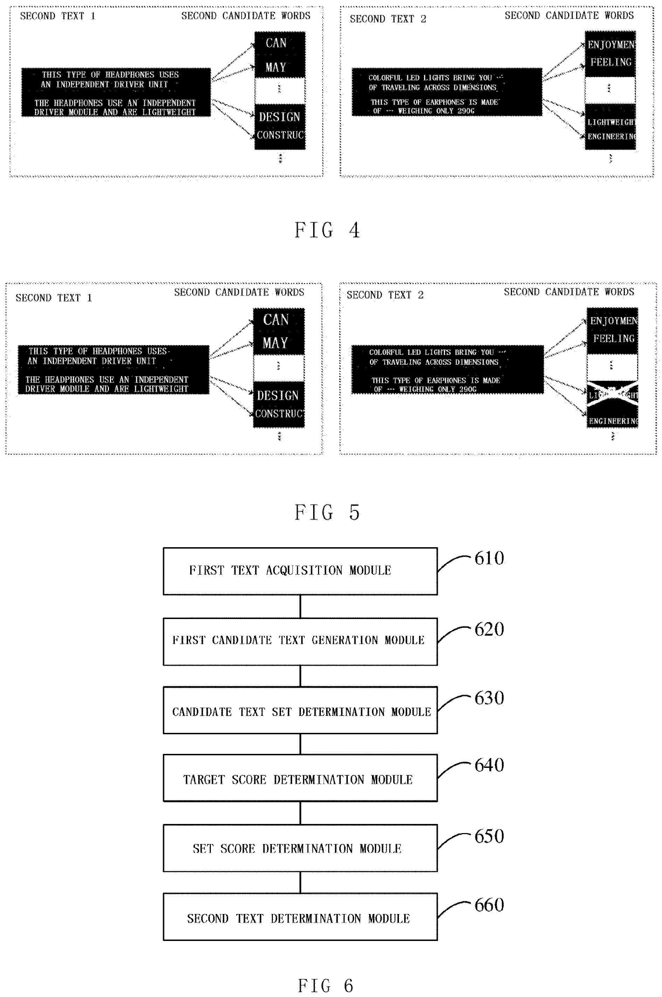

Exemplarily, FIG. 4 gives an example of a plurality of second candidate words corresponding to a second text. The preset number in FIG. 4 is 2, that is, there are two second texts. That is, in FIG. 4, the second text 1 includes two second texts, and the second text 2 also includes two second texts. Each second text independently determines corresponding second candidate words, and independently executes subsequent steps S380 to S391.

S380: using each current second candidate word corresponding to current second texts as a suffix of the current second texts to generate current second candidate texts corresponding to the current second texts.

It should be noted that each second text can be used as the current second text, and a third candidate text corresponding to each second text can be determined by executing steps S380 to S391 in parallel.

Exemplarily, each current second candidate word corresponding to the current second texts can be used as a suffix of the current second texts for concatenation and combination to obtain all current second candidate texts corresponding to the current second texts.

S390: determining a text score corresponding to each current second candidate text based on the word score corresponding to each word in each current second candidate text.

Exemplarily, for each current second candidate text, the word scores corresponding to various words in the current second candidate text can be added, and an obtained addition result can be used as a text score corresponding to the current second candidate text. The text score can be used to represent the readability of the current second candidate text. For example, the higher the text score, the higher the readability of the current second candidate text.

S391: determining, based on the text score, the preset number of current third candidate texts corresponding to the current second texts from a plurality of current second candidate texts.

Exemplarily, all the current second candidate texts can be arranged in descending order based on the text scores to obtain a current second candidate text sequence with successively decreasing text scores, and the previous preset number of current second candidate texts in the current second candidate text sequence can be determined as current third candidate texts corresponding to the current second texts, so that a corresponding preset number of third candidate texts can be generated for each second text independently of each other. The second texts do not affect each other, thereby improving the diversity of the third candidate texts between different second texts. Furthermore, when the lengths of the texts exceed a preset length, the diversity of the texts can be further guaranteed while ensuring the readability of the texts, thereby avoiding a decrease in the diversity of the generated texts.

S392: determining the preset number of third texts to be generated at the next moment from the third candidate texts corresponding to the preset number of second texts.

Exemplarily, an optimal preset number of third texts can be selected from all the third candidate texts based on the text score corresponding to each third candidate text corresponding to each second text.

Exemplarily, S392 may comprise: arranging, based on the text score corresponding to each third candidate text corresponding to each second text, all the third candidate texts corresponding to the preset number of second texts in descending order to obtain a third candidate text sequence; and determining a previous preset number of third candidate texts in the third candidate text sequence as third texts generated at the next moment. By using the previous preset number of third candidate texts with the highest text score as third texts generated at the next moment, the diversity of the texts can be further guaranteed while ensuring the readability of the texts.

The technical solution of the present embodiment generates a corresponding preset number of third candidate texts for each second text independently of each other, and determines a preset number of third texts to be generated at the next moment from all the third candidate texts, so that after the text lengths exceeds a preset length, the diversity of the texts can be further guaranteed while ensuring the readability of the texts.

Based on the above technical solution, S380 may comprise: acquiring used words in the preset number of second texts; comparing each current second candidate word corresponding to the current second texts with the used words to determine target second candidate words different from the used words; and using each target second candidate word as a suffix of the current second texts to generate current second candidate texts corresponding to the current second texts.

In this step, the used words may refer to words that have been used in the second texts. The target second candidate words may refer to current second candidate words remaining after removing the used words from all the current second candidate words.

FIG. 5 gives an example of target second candidate words corresponding to a second text. As shown in FIG. 5, all words included in the second text 1 and the second text 2 are used words. For the second text 1, each second candidate word corresponding to the second text 1 is not a used word, so that each second candidate word corresponding to the second text 1 can be directly used as a corresponding target second candidate word. For the second text 2, the second candidate word "lightweight" is a used word. At this time, "lightweight" can be deleted, and the remaining second candidate words can be used as target second candidate words corresponding to the second text 2. After the target second candidate words are determined, each target second candidate word corresponding to the current second texts can be used as a suffix of the current second texts for concatenation and combination to obtain all current second candidate texts corresponding to the current second texts. The used words that have been used are deleted from the second candidate words corresponding to the second texts to achieve deduplication processing, thereby avoiding the repeated appearance of the same word, improving the diversity of the current second candidate texts generated by different second texts, and further improving the diversity of generated third texts, so that after the text lengths exceed a preset length, the diversity of the texts can be further improved while ensuring the readability of the texts.

The following is an embodiment of a text generation apparatus provided by the embodiments of the present application. The apparatus belongs to the same inventive concept as the text generation method of the above various embodiments. For details not described in the embodiment of the text generation apparatus, please refer to the embodiments of the above-mentioned text generation method.

FIG. 6 is a schematic structural diagram of a text generation apparatus provided by an embodiment of the present application. The present embodiment is applicable to generating texts with diversity. As shown in FIG. 6, the apparatus comprises: a first text acquisition module 610, a first candidate text generation module 620, a candidate text set determination module 630, a target score determination module 640, a set score determination module 650, and a second text determination module 660.

In this apparatus, the first text acquisition module 610 is configured to: acquire a preset number of first texts generated at a previous moment; the first candidate text generation module 620 is configured to: determine a plurality of first candidate words corresponding to each of the first texts, and use each of the first candidate words as a suffix of the first text to generate a plurality of first candidate texts; the candidate text set determination module 630 is configured to: traverse and combine the plurality of first candidate texts corresponding to the preset number of first texts to determine a plurality of candidate text sets, wherein each candidate text set includes the preset number of first candidate texts; the target score determination module 640 is configured to: determine, based on each word in each first candidate text, repeated words that appear repeatedly in each candidate text set, and perform penalty processing on word scores corresponding to the repeated words to determine target scores corresponding to the repeated words, wherein the word scores corresponding to the repeated words are used to represent conditional probability values of the repeated words as text suffix words; the set score determination module 650 is configured to: determine, based on the target scores corresponding to the repeated words and word scores corresponding to non-repeated words in each candidate text set, a set score corresponding to each candidate text set; and the second text determination module 660 is configured to: determine a target text set from the plurality of candidate text sets based on the set score, and determine the preset number of second texts generated at a current moment based on the target text set.

The technical solution of the present embodiment, in the current time step, generates a plurality of first candidate texts based on a preset number of first texts generated at a previous moment, and traverses and combines the plurality of first candidate texts corresponding to the preset number of first texts to obtain a plurality of candidate text sets, performs word score penalty processing on repeated words that appear repeatedly in each candidate text set, and determines a set score corresponding to each candidate text set based on target scores after the penalty, determines a target text set from the plurality of candidate text sets based on the set score, and determines the preset number of second texts generated at the current moment based on the target text set, so as to tend to generate texts containing the non-repeated words by performing the word score penalty processing on the repeated words that appear repeatedly in each candidate text set, thereby improving the diversity of the generated texts.

Optionally, the target score determination module 640 is configured to:
acquire a corresponding word score of a current repeated word at each occurrence position; multiply a word score corresponding to at least one preset occurrence position by a preset penalty coefficient to obtain a corresponding target score of the current repeated word at the preset occurrence position;
and use word scores corresponding to remaining occurrence positions except the preset occurrence position as corresponding target scores of the current repeated word at the remaining occurrence positions.

Optionally, the set score determination module 650 is configured to:
add target scores corresponding to various repeated words and word scores corresponding to various non-repeated words in a current candidate text set, and determine an obtained addition result as a set score corresponding to the current candidate text set.

Optionally, the second text determination module 660 is configured to:
determine a candidate text set with the highest set score as the target text set, and determine various target texts in the target text set as the preset number of second texts generated at the current moment.

Optionally, the apparatus further comprises:
a second candidate word determination module configured to: after determining the preset number of second texts generated at the current moment, if lengths of the second texts are greater than or equal to a preset length, determine a plurality of second candidate words corresponding to each of the second texts;
a text score determination module configured to: use each of the second candidate words as a suffix of the second text to generate a plurality of second candidate texts, and determine a text score corresponding to each second candidate text based on the word score corresponding to each word in each second candidate text; and
a third text determination module configured to: determine, based on the text score, the preset number of third texts to be generated at the next moment from the plurality of second candidate texts.

Optionally, the text score determination module comprises:
a current second candidate text determination unit configured to: use each current second candidate word corresponding to the current second texts as a suffix of the current second texts, to generate current second candidate texts corresponding to the current second texts; and
a text score determination unit configured to: determine a text score corresponding to each current second candidate text based on the word score corresponding to each word in each current second candidate text;
the third text determination module comprises:
   a current third candidate text determination unit configured to: determine, based on the text score, a preset number of current third candidate texts corresponding to the current second texts from the plurality of current second candidate texts; and
   a third text determination unit configured to: determine a preset number of third texts to be generated at the next moment from the third candidate texts corresponding to each second text.

Optionally, the current second candidate text determination unit is configured to:
acquire used words in each second text; compare each current second candidate word corresponding to the current second texts with the used words to determine target second candidate words different from the used words; and use each of the target second candidate words as a suffix of the current second texts to generate current second candidate texts corresponding to the current second texts.

Optionally, the third text determination unit is configured to:
arrange, based on the text score corresponding to each third candidate text corresponding to each second text, the third candidate texts in descending order to obtain a third candidate text sequence;
and determine a previous preset number of third candidate texts in the third candidate text sequence as third texts generated at the next moment.

The text generation apparatus provided by the embodiment of the present application can execute the text generation method provided by any embodiment of the present application, and has corresponding functional modules for executing the text generation method.

It is worth noting that, in the above-mentioned embodiment of the text generation apparatus, various units and modules included are only divided according to functional logic, but are not limited to the above divisions, as long as the corresponding functions can be realized; in addition, the specific names of various functional units are only for the convenience of distinguishing them from each other and are not used to limit the scope of protection of the present application.

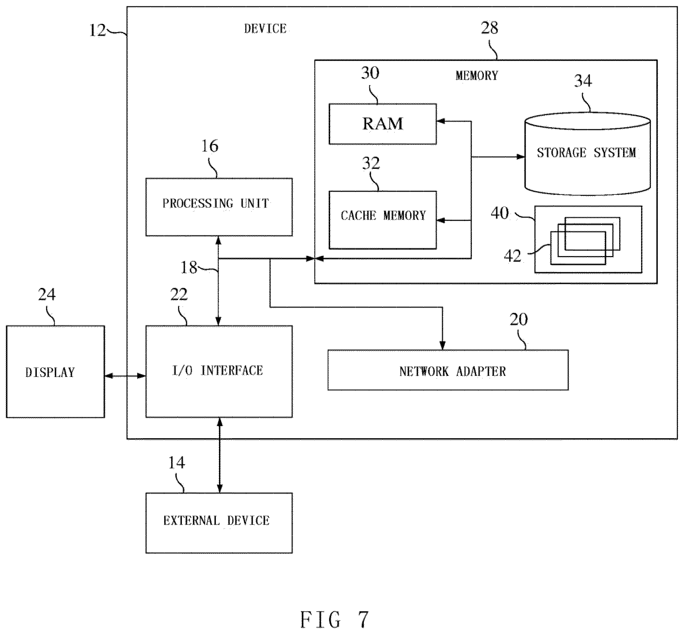

FIG. 7 is a schematic structural diagram of an electronic device provided by an embodiment of the present application. FIG. 7 shows a block diagram of an exemplary electronic device 12 suitable for implementing the embodiments of the present application. The electronic device 12 shown in FIG. 7, which is merely an example, should not impose any limitation on the functions and scopes of use of the embodiments of the present application.

As shown in FIG. 7, the electronic device 12 is in the form of a general-purpose computing device. The components of the electronic device 12 may include, but are not limited to: at least one processor or processing unit 16, a system memory 28, and a bus 18 connecting different system components (including the system memory 28 and the processing unit 16).

The bus 18 represents one or more of several types of bus structures, including a memory bus or memory controller, a peripheral bus, an accelerated graphics port, a processor or a local bus using any of a variety of bus structures. For example, these architectures include, but are not limited to, an industry standard architecture (ISA) bus, a micro channel architecture (MCA) bus, an enhanced ISA bus, a video electronics standards association (VESA) local bus, and a peripheral component interconnect (PCI) bus.

The electronic device 12 typically includes a variety of computer system readable media. Such media may be any available media that can be accessed by the electronic device 12, including volatile and non-volatile media as well as removable and non-removable media.

The system memory 28 may include computer system readable media in the form of volatile memories, such as a random access memory (RAM) 30 and/or a cache memory 32. The electronic device 12 may further include other removable/non-removable, volatile/non-volatile computer system storage media. By way of example only, the storage system 34 can be used to read and write to a non-removable, non-volatile magnetic medium (not shown in FIG. 7, and typically referred to as "a hard drive"). Although not shown in FIG. 7, a magnetic disk drive for reading and writing to a removable nonvolatile magnetic disk (e.g., "a floppy disk"), as well as an optical disk drive for reading and writing to a removable nonvolatile optical disk (e.g., a compact disc read-only memory (CD-ROM), a digital video disc read-only memory (DVD-ROM), or other optical media) can be provided. In these cases, each drive can be connected to the bus 18 via one or more data medium interfaces. The system memory 28 may include at least one program product having a set of (e.g., at least one) program modules, which are configured to perform the functions of the various embodiments of the present application.

A program/utility 40 having a set of (at least one) program modules 42 can be stored in, for example, the system memory 28, such program modules 42 including but not limited to an operating system, one or more application programs, other program modules, and program data, each or some combination of which may include the implementation of a network environment. The program modules 42 generally implement the functions and/or methods of the embodiments described in the present application.

The electronic device 12 can also communicate with one or more external devices 14 (e.g., a keyboard, a pointing device, a display 24, etc.), with one or more devices that enable the user to interact with the electronic device 12, and/or with any devices (e.g., a network card, a modem, etc.) that enable the electronic device 12 to communicate with one or more other computing devices. Such communications may occur via an input/output (I/O) interface 22. In addition, the electronic device 12 can also communicate with one or more networks (e.g., a local area network (LAN), a wide area network (WAN), and/or a public network, such as the Internet) via a network adapter 20. As shown in the figure, the network adapter 20 communicates with other modules of the electronic device 12 via the bus 18. It should be understood that, although not shown in the figure, other hardware and/or software modules can be used in conjunction with the electronic device 12, including but not limited to: a microcode, a device driver, a redundant processing unit, an external magnetic disk drive array, a magnetic disk array (RAID) system, a tape drive, and a data backup storage system.

The processing unit 16 executes various functional applications and data processing by running programs stored in the system memory 28, e.g., implementing the steps of a text generation method provided by the embodiment of the present invention, the method comprising:
acquiring a preset number of first texts generated at a previous moment;
determining a plurality of first candidate words corresponding to each of the first texts, and using each of the first candidate words as a suffix of the first text to generate a plurality of first candidate texts; traversing and combining the plurality of first candidate texts corresponding to the preset number of first texts to determine a plurality of candidate text sets, wherein each candidate text set includes the preset number of first candidate texts;
determining, based on each word in each first candidate text, repeated words that appear repeatedly in each candidate text set, and performing penalty processing on word scores corresponding to the repeated words to determine target scores corresponding to the repeated words, wherein the word scores corresponding to the repeated words are used to represent conditional probability values of the repeated words as text suffix words;
determining, based on the target scores corresponding to the repeated words and word scores corresponding to non-repeated words in each candidate text set, a set score corresponding to each candidate text set; and
determining a target text set from the plurality of candidate text sets based on the set score, and determining the preset number of second texts generated at a current moment based on the target text set.

Certainly, those skilled in the art can understand that the processor can also implement the technical solution of a text generation method provided by any embodiment of the present application.

The present embodiment provides a computer-readable storage medium having a computer program stored thereon that, when executed by a processor, implements the steps of a text generation method provided by any embodiment of the present application, the method comprising:
acquiring a preset number of first texts generated at a previous moment;
determining a plurality of first candidate words corresponding to each of the first texts, and using each of the first candidate words as a suffix of the first text to generate a plurality of first candidate texts; traversing and combining the plurality of first candidate texts corresponding to the preset number of first texts to determine a plurality of candidate text sets, wherein each candidate text set includes the preset number of first candidate texts;
determining, based on each word in each first candidate text, repeated words that appear repeatedly in each candidate text set, and performing penalty processing on word scores corresponding to the repeated words to determine target scores corresponding to the repeated words, wherein the word scores corresponding to the repeated words are used to represent conditional probability values of the repeated words as text suffix words;
determining, based on the target scores corresponding to the repeated words and word scores corresponding to non-repeated words in each candidate text set, a set score corresponding to each candidate text set; and
determining a target text set from the plurality of candidate text sets based on the set score, and determining the preset number of second texts generated at a current moment based on the target text set.

The computer storage medium of the embodiment of the present application may adopt any combination of one or more computer-readable media. The computer-readable medium may be a computer-readable signal medium or a computer-readable storage medium. The computer-readable storage medium may be, for example, but not limited to, an electrical, magnetic, optical, electromagnetic, infrared, or semiconductor system, apparatus or device, or any combination of the foregoing. More specific examples (a non-exhaustive list) of the computer-readable storage medium include: an electrical connection having one or more conductors, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present application, the computer-readable storage medium may be any tangible medium that contains or stores a program, which can be used by or in conjunction with an instruction execution system, apparatus or device.

The computer-readable signal medium may include a data signal propagated in a baseband or as part of a carrier wave, in which a computer-readable program code is carried. Such a propagated data signal may take a variety of forms, including but not limited to an electromagnetic signal, an optical signal, or any suitable combination of the foregoing. The computer-readable signal medium, which may also be any computer-readable medium other than the computer-readable storage medium, can send, propagate or transport a program for use by or in conjunction with an instruction execution system, apparatus or device.

The program code contained on the computer-readable medium may be transmitted by any appropriate medium, including but not limited to: wireless, a wire, an optical cable, a radio frequency (RF) and the like, or any suitable combination of the foregoing.

The computer program code for performing the operations of the present application can be written in one or more programming languages or a combination thereof, including object-oriented programming languages, such as Java, Smalltalk and C++, as well as conventional procedural programming languages -- such as the "C" language or similar programming languages. The program code can be executed entirely on a user's computer, partly on the user's computer, as a stand-alone software package, partly on the user's computer and partly on a remote computer, or entirely on a remote computer or server. Where a remote computer is involved, the remote computer can be connected to the user's computer via any type of network, including a local area network (LAN) or a wide area network (WAN), or can be connected to an external computer (e.g., via the Internet using an Internet service provider).

Those skilled in the art should understand that the above-mentioned various modules or steps of the present application can be implemented by a general-purpose computing device, and they can be concentrated on a single computing device or distributed on a network composed of multiple computing devices. Optionally, they can be implemented using program codes executable by a computer device, so that they can be stored in a storage device and executed by the computing device, or they can be fabricated into various integrated circuit modules, respectively, or multiple modules or steps thereof can be fabricated into a single integrated circuit module, for the implementation. Thus, the present application is not limited to any specific combination of hardware and software.

Please note that the above are only optional embodiments of the present application and technical principles used therein. Those skilled in the art will understand that the present application is not limited to the specific embodiments described herein, and will be able to make various obvious changes, readjustments, and substitutions without departing from the scope of protection of the present application. Therefore, although the present application has been described in detail through the above embodiments, the present application is not limited to the above embodiments, and may also include more other equivalent embodiments without departing from the concept of the present application. The scope of the present application is determined by the scopes of the appended claims.

## Claims

1. A text generation method, comprising:
acquiring a preset number of first texts generated at a previous moment;
determining a plurality of first candidate words corresponding to each of the first texts, and using each of the first candidate words as a suffix of the first text to generate a plurality of first candidate texts;
traversing and combining the plurality of first candidate texts corresponding to the preset number of the first texts to determine a plurality of candidate text sets, wherein each candidate text set includes the preset number of first candidate texts;
determining repeated words that appear repeatedly in each candidate text set, and performing penalty processing on word scores corresponding to the repeated words to determine target scores corresponding to the repeated words, wherein the word scores corresponding to the repeated words are used to represent conditional probability values of the repeated words as text suffix words;
determining, based on the target scores corresponding to the repeated words and word scores corresponding to non-repeated words in each candidate text set, a set score corresponding to each candidate text set; and
determining a target text set from the plurality of candidate text sets based on the set score, and
determining the preset number of second texts generated at a current moment based on the target text set.

2. The method according to claim 1, wherein performing penalty processing on word scores corresponding to the repeated words to determine target scores corresponding to the repeated words comprises:
acquiring a corresponding word score of a current repeated word at each occurrence position;
multiplying a word score corresponding to at least one preset occurrence position by a preset penalty coefficient to obtain a corresponding target score of the current repeated word at the at least one preset occurrence position; and
using word scores corresponding to remaining occurrence positions except the at least one preset occurrence position as corresponding target scores of the current repeated word at the remaining occurrence positions.

3. The method according to claim 1, wherein determining, based on the target scores corresponding to the repeated words and word scores corresponding to non-repeated words in each candidate text set, a set score corresponding to each candidate text set comprises:
adding target scores corresponding to all repeated words and word scores corresponding to all non-repeated words in a current candidate text set, and determining an obtained addition result as a set score corresponding to the current candidate text set.

4. The method according to claim 1, wherein determining a target text set from the plurality of candidate text sets based on the set score, and determining the preset number of second texts generated at a current moment based on the target text set comprise:
determining a candidate text set with the highest set score as the target text set, and determining target texts in the target text set as the preset number of the second texts generated at the current moment.

5. The method according to any one of claims 1 to 4, after determining the preset number of second texts generated at the current moment, further comprising:
if lengths of the second texts are greater than or equal to a preset length, determining a plurality of second candidate words corresponding to each of the second texts;
using each of the second candidate words as a suffix of the second text to generate a plurality of second candidate texts, and determining a text score corresponding to each second candidate text based on the word score corresponding to each word in each second candidate text; and
determining, based on the text score, the preset number of third texts to be generated at the next moment from the plurality of second candidate texts corresponding to the preset number of the second texts.

6. The method according to claim 5, wherein using each of the second candidate words as a suffix of the second text to generate a plurality of second candidate texts, and determining a text score corresponding to each second candidate text based on the word score corresponding to each word in each second candidate text comprise:
using each current second candidate word corresponding to current second texts as a suffix of the current second texts to generate current second candidate texts corresponding to the current second texts; and
determining a text score corresponding to each current second candidate text based on the word score corresponding to each word in each current second candidate text;
determining, based on the text score, the preset number of third texts to be generated at the next moment from the plurality of second candidate texts corresponding to the preset number of the second texts comprises:
determining, based on the text score, the preset number of current third candidate texts corresponding to the current second texts from a plurality of current second candidate texts; and
determining the preset number of the third texts to be generated at the next moment from the third candidate texts corresponding to the preset number of the second texts.

7. The method according to claim 6, wherein using each current second candidate word corresponding to current second texts as a suffix of the current second texts to generate current second candidate texts corresponding to the current second texts comprises:
acquiring used words in the preset number of the second texts;
comparing each current second candidate word corresponding to the current second texts with the used words to determine target second candidate words different from the used words; and
using each of the target second candidate words as a suffix of the current second texts to generate current second candidate texts corresponding to the current second texts.

8. The method according to claim 6, wherein determining the preset number of the third texts to be generated at the next moment from the third candidate texts corresponding to the preset number of the second texts comprises:
arranging, based on the text score corresponding to each third candidate text corresponding to each second text, the third candidate texts corresponding to the preset number of the second texts in descending order to obtain a third candidate text sequence; and
determining a previous preset number of third candidate texts in the third candidate text sequence as third texts generated at the next moment.

9. A text generation apparatus, comprising:
a first text acquisition module configured to: acquire a preset number of first texts generated at a previous moment;
a first candidate text generation module configured to: determine a plurality of first candidate words corresponding to each of the first texts, and use each of the first candidate words as a suffix of the first text to generate a plurality of first candidate texts;
a candidate text set determination module configured to: traverse and combine the plurality of first candidate texts corresponding to the preset number of the first texts to determine a plurality of candidate text sets, wherein each candidate text set includes the preset number of first candidate texts;
a target score determination module configured to: determine, based on each word in each first candidate text, repeated words that appear repeatedly in each candidate text set, and perform penalty processing on word scores corresponding to the repeated words to determine target scores corresponding to the repeated words, wherein the word scores corresponding to the repeated words are used to represent conditional probability values of the repeated words as text suffix words;
a set score determination module configured to: determine, based on the target scores corresponding to the repeated words and word scores corresponding to non-repeated words in each candidate text set, a set score corresponding to each candidate text set; and
a second text determination module configured to: determine a target text set from the plurality of candidate text sets based on the set score, and determine the preset number of second texts generated at a current moment based on the target text set.

10. An electronic device, comprising:
at least one processor; and
a memory configured to store at least one program that, when executed by the at least one processor, causes the at least one processor to implement the text generation method according to any one of claims 1 to 8.

11. A computer-readable storage medium having a computer program stored thereon that, when executed by a processor, implements the text generation method according to any one of claims 1 to 8.
